# EUROPEAN PATENT APPLICATION

(11) **EP 2 138 336 A1**
(43) Date of publication of application: **30.12.2009**
(21) Application number: 08425445.7
(22) Date of filing: 24.06.2008
(51) Int. Cl.: B60J 1/00, B60P 3/32

(54) **Window for vehicles and vehicle comprising this window**

(71) Applicant: S.E.A. Società Europea Autocaravan S.p.A., 27030 Trivolzio (PV) (IT)
(72) Inventor: Bianchi, Luca, 20123 Milano MI (IT)
(74) Representative: Pizzoli, Antonio

(57) **Abstract**

Window for vehicles, which comprises an outer wall (1) provided with an opening (2) which is closed by at least one transparent panel (3), wherein a connection member (5) comprises a first frame (5a) arranged around the transparent panel (3) and a second frame (5b) having a dihedral shape for being arranged around an opening (6) made at a corner of a cabin (7) of a vehicle, so that the connection member (5) is comprised between the transparent panel (3) and the corner of the cabin (7). The present invention also relates to a vehicle, in particular a camper or a caravan, comprising said window.

## Description

The present invention relates to a window for vehicles, and in particular to an angular window which can be mounted on campers, caravans and the like. The present invention also relates to a vehicle, in particular a camper or a caravan, comprising said window.

The passengers in the cabin of a camper generally have a reduced front view, since they can look forward only through the windows of the driving cabin, which are partially obscured at least by the front seats, so that the view is limited to the space left free by these seats. On the other hand, the space comprised between the passenger cabin and the driving cabin is very small, so that it is difficult to obtain a window in it, especially without weakening the structure of the camper and without decreasing its thermal and/or acoustic insulation.

It is therefore an obj ect of the present invention to provide a camper which is free from said disadvantages. Said object is achieved with a window, a vehicle, a camper and a caravan, whose main features are disclosed in claims 1, 10, 11 and 12, while other features are disclosed in the remaining claims.

Thanks to its particular structure, the window according to the present invention can be applied in front of an opening made on a front corner of the passenger cabin of a camper, without compromising its solidity or its water and air seal. With this arrangement, the front view of the passengers is significantly increased despite the small space between the passenger cabin and the driving cabin.

Furthermore, thanks to the particular arrangement of its transparent parts, the window according to the present invention avoids the formation of condensate and has anyway a good visibility and a pleasant aesthetic appearance due to the uniformity and the curvature of the outer wall and of the transparent wall closing the window from the outside. For this purpose, the outer wall has a suitable seat for said transparent wall. The shape, the arrangement and the structure of the transparent panel arranged behind the transparent wall and of the connection member arranged between the transparent panel and the cabin allow to obtain a high insulation from the atmospheric agents and an optimal mechanical resistance, thereby compensating the structural weakening caused by the opening made at the corner of the cabin.

Further advantages and features of the window, the vehicle and the camper according to the present invention will become clear to those skilled in the art from the following detailed and non-limiting description of an embodiment thereof with reference to the attached drawings, wherein:
- figures 1 to 3 show three perspective views of the window,
- figure 4 shows a side view of the window of figure 1;
- figure 5 shows section V-V of figure 4;
- figures 6 and 7 show two exploded view of the window of figure 1;
- figure 8 show a side view of a camper comprising the window of figure 1; and
- figure 9 shows a perspective partial view of the camper of figure 8.

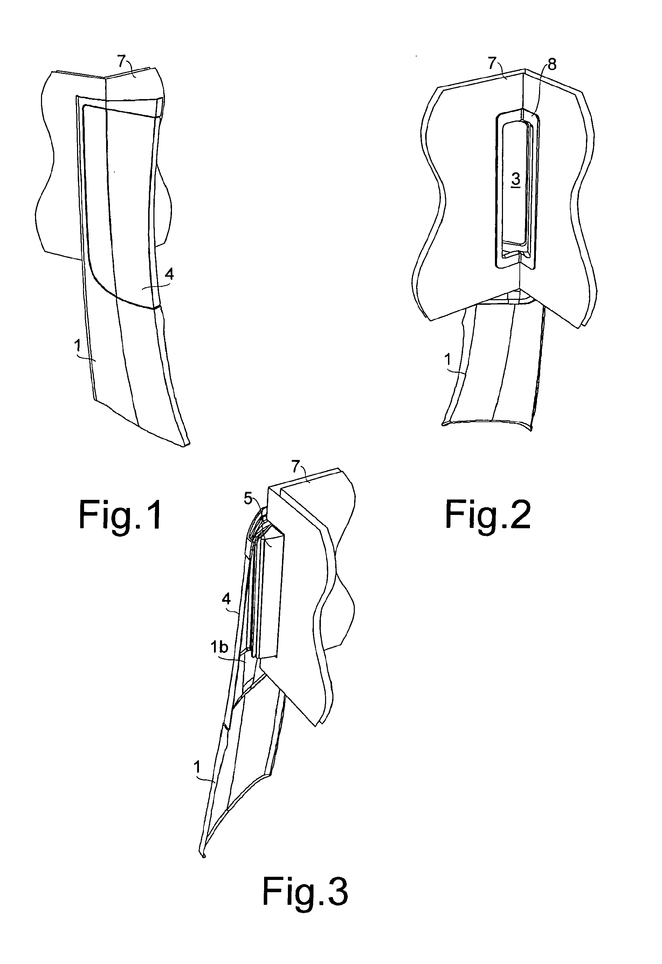

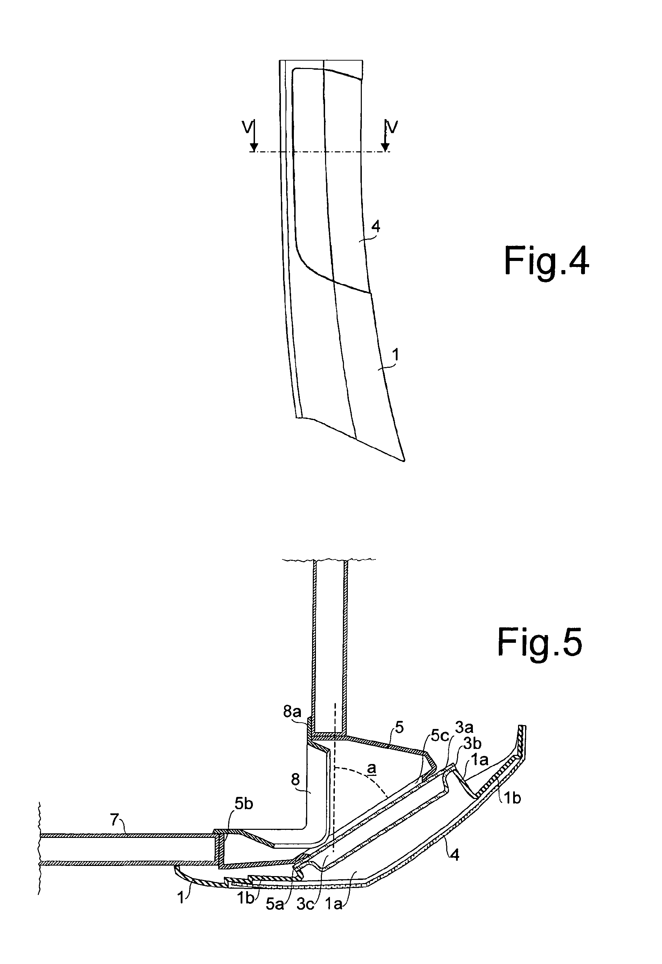

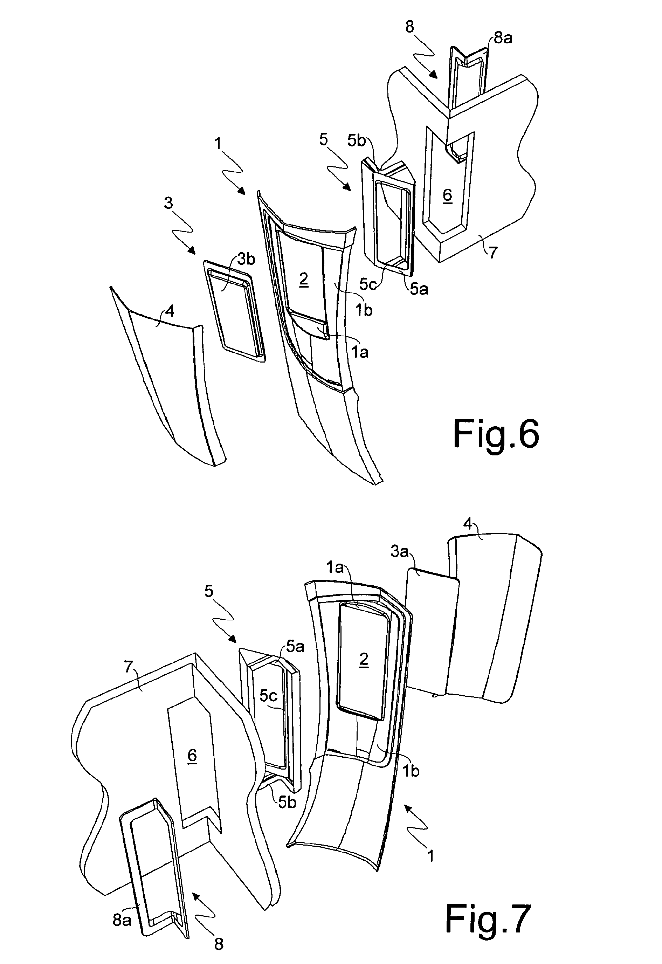

Referring to figures 1 to 7, it is seen that the window according to the present invention comprises in a known way an outer wall 1 provided with an opening 2 which is closed by at least one substantially flat transparent panel 3, in particular rectangular. Outer wall 1 is made of a plastic material and has a substantially rectangular or trapezoid shape.

Outer wall 1 is further concave with transparent panel 3 arranged in the concave space of outer wall 1. Outer wall 1 is provided with a perimetric projection 1a which surrounds opening 2 and contacts transparent panel 3, which comprises a pair of transparent panes 3a, 3b, for example made of glass or a plastic material, joined to each other so as to form a chamber 3c which acts as a thermal insulator and avoids condensate on transparent panel 3. In particular, the edges of transparent pane 3b of transparent panel 3 are shaped so as to form a perimetric projection joined to the edges of the other transparent pane 3a for forming chamber 3c. Transparent pane 3b with the shaped edges contacts perimetric projection 1a of outer wall 1.

The outer surface of outer wall 1 is provided with an indented seat 1b which is made around opening 2 and houses a transparent wall 4 having substantially the same outer profile of outer wall 1, so that the outer surfaces of outer wall 1 and transparent wall 4 do not have steps along their adjacent edges, so as to increase the vehicle aerodynamics.

A connection member 5 comprises a first frame 5a arranged around transparent panel 3 and a second frame 5b suitable for being arranged around an opening 6 made at a corner of a cabin 7 of a vehicle, so that connection member 5 is comprised between transparent panel 3 and the corner of cabin 7. Connection member 5 is made of a rigid material but in any case suitable for absorbing torsions and vibrations. First frame 5a of connection member 5 has a substantially flat and substantially rectangular shape with a perimetric projection 5c contacting the inner surface of transparent panel 3, in particular transparent pane 3a. Second frame 5b of connection member 5 has a dihedral shape having an angle substantially equal to the angle formed by the two walls of cabin 7 forming the corner provided with opening 6. First frame 5a is arranged on a plane forming an angle a comprised between 20° and 70° with one of the two dihedral planes of second frame 5b.

A second dihedral frame 8 is arranged at least partially in second frame 5b of connection member 5, so that the edges of opening 6 can be comprised between second frame 5b of connection member 5 and second dihedral frame 8. For this purpose, second dihedral frame 8 is provided with a dihedral flange 8a suitable for contacting the inner surface of cabin 7 around opening 6.

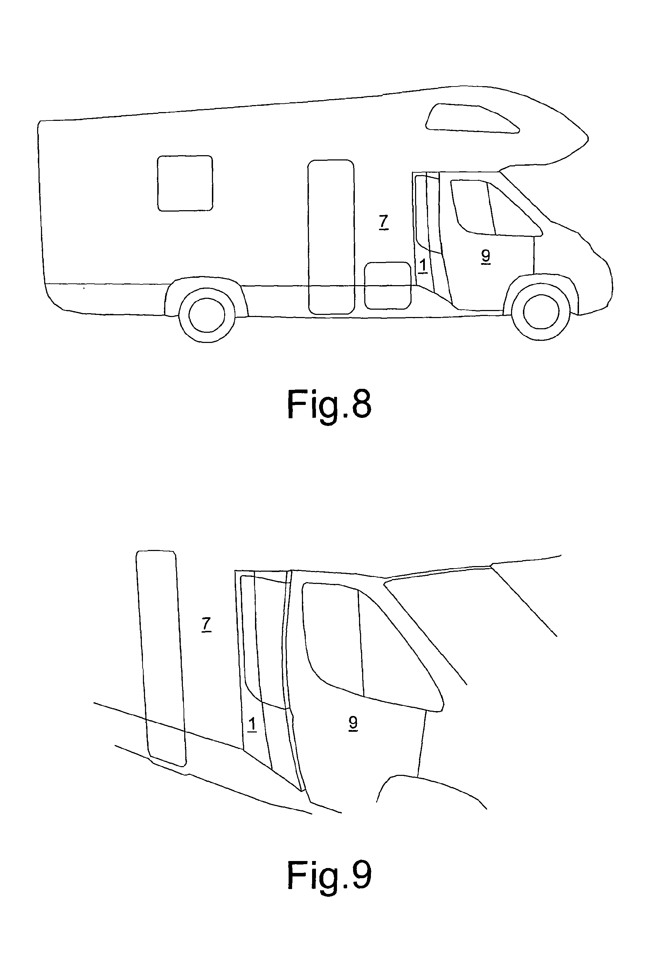

Referring to figures 8 and 9, it is seen that one or more corners of cabin 7 of a vehicle can be provided with the window according to the present invention. In particular, outer wall 1 of the window is arranged in front of one of the front corners of passenger cabin 7 of a camper behind the access door of driving cabin 9.

Possible modifications and/or additions may be made by those skilled in the art to the hereinabove disclosed and illustrated embodiment while remaining within the scope of the following claims.

## Claims

1. Window for vehicles, which comprises an outer wall (1) provided with an opening (2) which is closed by at least one transparent panel (3), **characterized in that** a connection member (5) comprises a first frame (5a) arranged around the transparent panel (3) and a second frame (5b) having a dihedral shape for being arranged around an opening (6) made at a corner of a cabin (7) of a vehicle, so that the connection member (5) is comprised between the transparent panel (3) and the corner of the cabin (7).

2. Window for vehicles according to the previous claim**, characterized in that** the transparent panel (3) is substantially flat and the first frame (5a) of the connection member (5) has a substantially flat shape with a perimetric projection (5c) contacting the inner surface of the transparent panel (3).

3. Window for vehicles according to the previous claim, **characterized in that** the first frame (5a) is arranged on a plane forming an angle (a) comprised between 20° and 70° with one of the two dihedral planes of the second frame (5b).

4. Window for vehicles according to one of the previous claims, **characterized in that** the outer wall (1) is concave with the transparent panel (3) arranged in the concave space of the outer wall (1).

5. Window for vehicles according to one of the previous claims, **characterized in that** the outer wall (1) is provided with a perimetric projection (1a) which surrounds its opening (2) and contacts the transparent panel (3).

6. Window for vehicles according to one of the previous claims, **characterized in that** the transparent panel (3) comprises a pair of transparent panes (3a, 3b) joined to each other so as to form a chamber (3c), wherein the edges of the transparent pane (3b) contacting the outer wall (1) are shaped so as to form a perimetric projection joined to the edges of the other transparent pane (3a) for forming the chamber (3c).

7. Window for vehicles according to one of the previous claims, **characterized in that** the outer surface of the outer wall (1) is provided with an indented seat (1b) which is made around its opening (2) and houses a transparent wall (4) having substantially the same outer profile of the outer wall (1), so that the outer surface of the outer wall (1) and of the transparent wall (4) do not have steps along their adjacent edges.

8. Window for vehicles according to one of the previous claims, **characterized in that** a second dihedral frame (8) is arranged at least partially in the second frame (5b) of the connection member (5), so that the edges of the opening (6) of the cabin (7) can be comprised between the second frame (5b) of the connection member (5) and the second dihedral frame (8).

9. Window for vehicles according to one of the previous claims, **characterized in that** the second dihedral frame (8) is provided with a dihedral flange (8a) suitable for contacting the inner surface of the cabin (7) around its opening (6).

10. Vehicle comprising a cabin (7), **characterized in that** at least one corner of the cabin (7) is provided with a window according to one of the previous claims.

11. Camper comprising a passenger cabin (7) and a driving cabin (9), **characterized in that** the outer wall (1) of a window according to one of claims 1 to 9 is arranged in front of one of the front corners of the passenger cabin (7) behind the access door of the driving cabin (9).

12. Caravan comprising a cabin (7), **characterized in that** at least one corner of the cabin (7) is provided with a window according to one of claims 1 to 9.
